# FASCICULE DE BREVET EUROPEEN

(11) **EP 2 099 642 B1**
(45) Date de publication et mention de la délivrance du brevet: **20.03.2019**
(21) Numéro de dépôt: 07871842.6
(22) Date de dépôt: 12.12.2007
(51) Int. Cl.: B60M 1/36, B60L 5/42, B60L 11/18, B60M 7/00

(54) **SYSTEME DE FOURNITURE ET DE CAPTAGE OCCASIONNELS D'ENERGIE ELECTRIQUE NOTAMMENT POUR UN VEHICULE URBAIN DE TRANSPORT EN COMMUN**
SYSTEM ZUR LIEFERUNG UND GELEGENTLICHE AUFNAHME VON ELEKTRISCHEN ENERGIE INSBESONDERE FUR EIN FAHRZEUG DES ÖFFENTLICHEN VERKEHRS
SYSTEM FOR SPORADIC SUPPLY AND TAPPING OF ELECTRICAL ENERGY ESPECIALLY FOR AN URBAN VEHICLE USED FOR PUBLIC TRANSPORT

(30) Priorité: 20.12.2006 FR 0611111
(43) Date de publication de la demande: 16.09.2009
(73) Titulaire: NewTL, 67120 Duppigheim (FR)
(72) Inventeur: ANDRE, Jean-Luc, F-67120 Molsheim (FR); VERDIER, Laurent, F-67114 Eschau (FR)
(74) Mandataire: Nuss, Laurent
(86) Numéro de dépôt international: PCT/FR2007/002048
(87) Numéro de publication internationale: WO 2008/087287

(56) Documents cités:
- WO-A-01/72547
- DE-A1- 10 313 698
- FR-A- 1 310 672
- FR-A1- 2 863 216
- JP-A- 2004 136 860

## Description

La présente invention se rapporte à un système de captage occasionnel d'énergie électrique pour véhicule urbain de transport en commun.

Pour des raisons écologiques, la traction électrique s'impose au sein des agglomérations urbaines dans le domaine des transports en commun.

Les lignes aériennes d'alimentation électrique supposent des structures de support et des liaisons filaires coûteuses et disgracieuses.

Outre leur aspect peu esthétique et leurs dimensions qui encombrent le champ visuel et détériorent la beauté des quartiers et monuments, les caténaires présentent un danger d'électrisation et un obstacle en hauteur.

D'un autre côté se développent des véhicules de transport en commun autonomes en énergie sur des parcours plus ou moins longs. Il s'agit de véhicules à traction ou à propulsion électrique à partir d'éléments électrochimiques (batteries, supercondensateurs) mais aussi d'énergie en réserve par exemple sous la forme d'énergie cinétique procurée par un volant rotatif d'inertie entraîné à haute vitesse et autres moyens.

Si ces systèmes apportent une solution intéressante au plan de l'écologie et des nuisances diverses dont la détérioration du paysage urbain, l'inconvénient principal concerne la faible capacité d'accumulation en énergie et le rendement énergétique global très moyen.

Par ailleurs, au coût du matériel s'ajoute celui des moyens d'accumulation d'énergie.

Il existe déjà des systèmes autonomes dont la recharge en énergie s'effectue au niveau des stations d'arrêt sur le parcours et dans des stations terminales. Ils nécessitent des durées assez longues d'immobilisation.

Le captage d'énergie pour la recharge s'effectue à l'arrêt par l'intermédiaire d'un ou de plusieurs rails au sol.

Pour des raisons d'exploitation, les temps d'arrêt dans les stations de transport public ne peuvent excéder la durée d'immobilisation correspondant à la descente et à la montée des voyageurs.

Cette durée est souhaitée aussi courte que possible pour ne pas pénaliser celle du trajet. De plus, on cherche à la réduire afin d'améliorer encore le temps de transit.

Ainsi, les durées de recharge à chaque station étant assez faibles, elles ne peuvent améliorer que faiblement l'autonomie.

On connait aussi les bus électriques divulgués dans la demande de brevet WO 01/72547 A, qui sont capables de se déplacer sur des trajets variés à condition de passer à proximité de distributeurs d'énergie ultrarapides, reliés au réseau électrique général.

Ces distributeurs comprennent une réserve d'énergie électrique souterraine et des poteaux supportant une portion de caténaire. Les véhicules sont équipés sur leur toit d'un pantographe classique leur permettant de capter l'énergie électrique distribuée par ces portions de caténaire.

Bien que l'alimentation électrique de ces véhicules antérieurs soit discontinue et occasionnelle, elle se fait au moyen de portions de caténaire de longueur importante et à l'aide d'une association caténaire/pantographe classique.

La présente invention a pour but d'augmenter la durée de recharge aux stations, mais aussi et surtout de réduire la consommation électrique sur les réserves en fournissant une énergie électrique complémentaire ou motrice dans les phases de grande consommation d'énergie telles que les démarrages, les accélérations, les montées ...

Ce système de fourniture occasionnelle de l'extérieur en énergie électrique est utilisé à l'arrêt en recharge et en roulage en énergie complémentaire ou simplement de traction. Il peut, par un surdimensionnement en puissance, participer aussi en roulage à la recharge des réserves lors des phases de grande consommation d'énergie.

On arrive ainsi à augmenter sensiblement l'autonomie et à satisfaire totalement les exigences d'exploitation d'un système de transport en commun urbain.

A cet effet, on prévoit sur le trajet du véhicule urbain de transport en commun des tronçons de voie de circulation équipés sur une longueur suffisante d'un système de fourniture et de captage d'énergie électrique utilisé pour la recharge en énergie de réserves ou pour l'alimentation en énergie motrice sur ces tronçons ou bien pour les deux simultanément.

De tels tronçons de fourniture et de captage pour la recharge électrique uniquement sont notamment prévus dans les zones d'arrêt du véhicule.

Avantageusement, les tronçons de captage se poursuivent de part et d'autre des stations d'arrêt pour augmenter la durée de recharge et alimenter le véhicule pendant la phase de démarrage. L'énergie à transférer s'en trouve réduite et l'autonomie non seulement préservée mais augmentée.

Ainsi, grâce à l'invention, on gagne en autonomie et ceci moyennant des travaux d'électrification simples et peu coûteux mettant en oeuvre des structures légères et peu développées notamment en longueur.

Ces tronçons localisés de captage ne nécessitent pas ou peu d'infrastructures et peuvent se partager avec d'autres fonctions utiles de l'espace public comme par exemple l'éclairage.

La sécurité urbaine et les problèmes de pollution visuelle et atmosphériques s'en trouvent grandement améliorés.

D'autres caractéristiques et avantages de l'invention apparaîtront à la lecture de la description détaillée qui va suivre, description faite en référence aux dessins annexés, dans lesquels :
- la figure 1 est un schéma d'une fraction de parcours typique avec différents tronçons spécifiques de captage d'énergie,
- la figure 2 est une vue frontale de deux rames en position d'alimentation électrique à partir d'un même poteau distributeur,
- la figure 3 est une vue frontale d'un poteau distributeur montrant le rabattement de ses deux branches,
- la figure 4 est une vue schématique en perspective montrant un véhicule et sa structure réceptrice de toit sur laquelle les éléments de contact électrique sont en appui.

La description ci-après porte sur une fourniture et un captage occasionnels d'énergie électrique par contact direct ou à distance, par exemple par induction, en vue de recharger momentanément sur le parcours une réserve d'énergie électrique et/ou d'apporter l'énergie électrique nécessaire à la traction ou à la propulsion dans certaines phases par transfert direct ou à distance d'énergie électrique.

Cependant, il est bien entendu que cette recharge ou alimentation motrice ne porte pas uniquement sur une réserve formée de batteries, mais sur toute possibilité et tous moyens d'accumulation d'énergie à bord d'un véhicule à partir d'énergie électrique venue de l'extérieur et accumulée autrement, notamment par supercondensateurs, par volant d'inertie et autres.

Selon l'invention, le parcours urbain d'un véhicule de transport en commun comporte, en différents endroits, des tronçons ou sections de fourniture et de captage d'énergie électrique. Il s'agit de sections spécifiques dans des stations d'arrêt 1 ou de tronçons courants dans des endroits particuliers le long desquels le besoin en énergie est plus fort. On peut distinguer parmi ceux-ci, des tronçons ou sections de fourniture et de captage en montée 2 ou d'accélération après des plages de ralentissement ou des tronçons de démarrage après des arrêts forcés de circulation, par exemple à un feu d'arrêt.

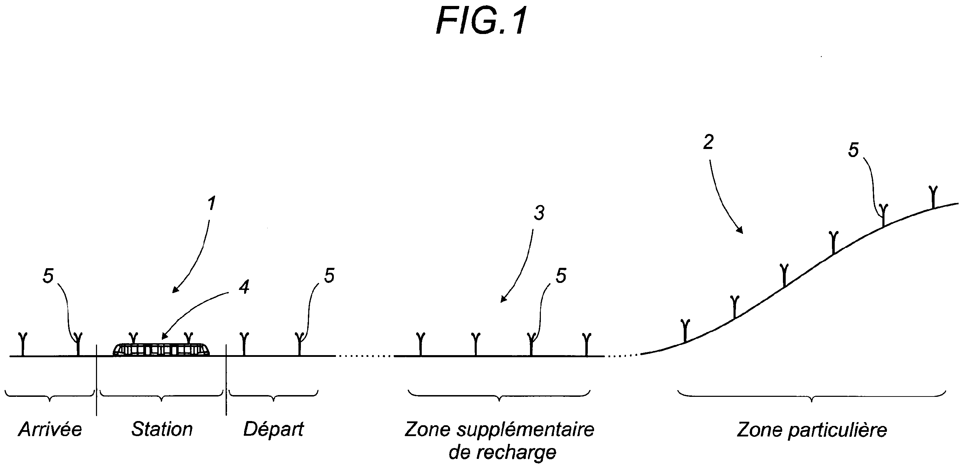

La figure 1 montre l'implantation de l'alimentation électrique dans une station d'arrêt 1 avec une zone d'entrée et une zone de départ. Elle montre aussi une section de montée 2 définie comme zone particulière ainsi qu'une zone supplémentaire de recharge 3.

Comme indiqué, lorsque la distance entre les stations 1 devient importante, il peut également être prévu dans des endroits appropriés, des zones supplémentaires de recharge 3 qu'un véhicule 4 par exemple urbain de transport en commun traverse en roulant. Dans ces zones supplémentaires 3, le véhicule 4 peut recharger ses batteries, mais aussi bénéficier d'un gain en énergie par une accélération momentanée dans les limites opérationnelles imposées par les définitions d'exploitation.

On décrira ci-dessous un mode de réalisation préférentiel de l'invention appliqué à une alimentation électrique aérienne d'un véhicule urbain de transport en commun. Il est bien entendu que le transfert d'énergie peut s'effectuer sans contact en aérien par exemple par induction.

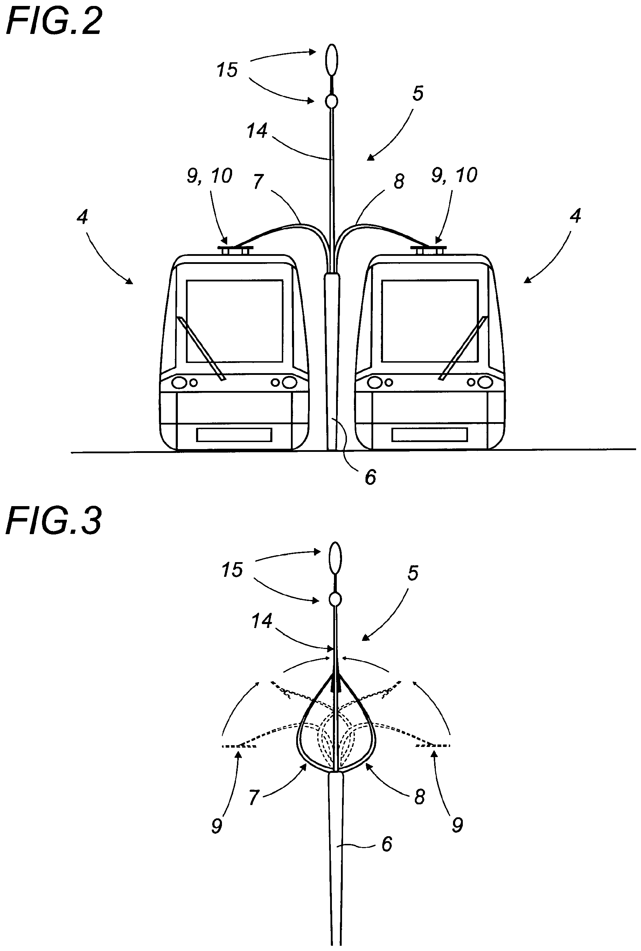

Chaque tronçon ou section de captage est équipé d'une pluralité de moyens individuels de fourniture d'énergie électrique par exemple des poteaux distributeurs tels que 5 monobranche ou bi-branches dans le cas de deux voies de circulation parallèles, par exemple du type de ceux représentés sur la figure 2, comportant un fût 6 et une ou deux branches flexibles 7 ou 8.

Chaque branche 7 ou 8 comporte à son extrémité un élément 9 de distribution d'énergie électrique, par exemple sous la forme d'une barre de contact 10 à la manière d'un pantographe.

Les poteaux distributeurs constituent autant de sources individuelles de fourniture d'énergie électrique.

Ils sont de préférence régulièrement espacés.

Cette barre 10 de chaque poteau distributeur vient en contact mobile de fourniture d'énergie électrique avec au moins une piste d'un équipement supérieur de captage d'énergie électrique que porte chaque véhicule en partie supérieure au niveau de son toit.

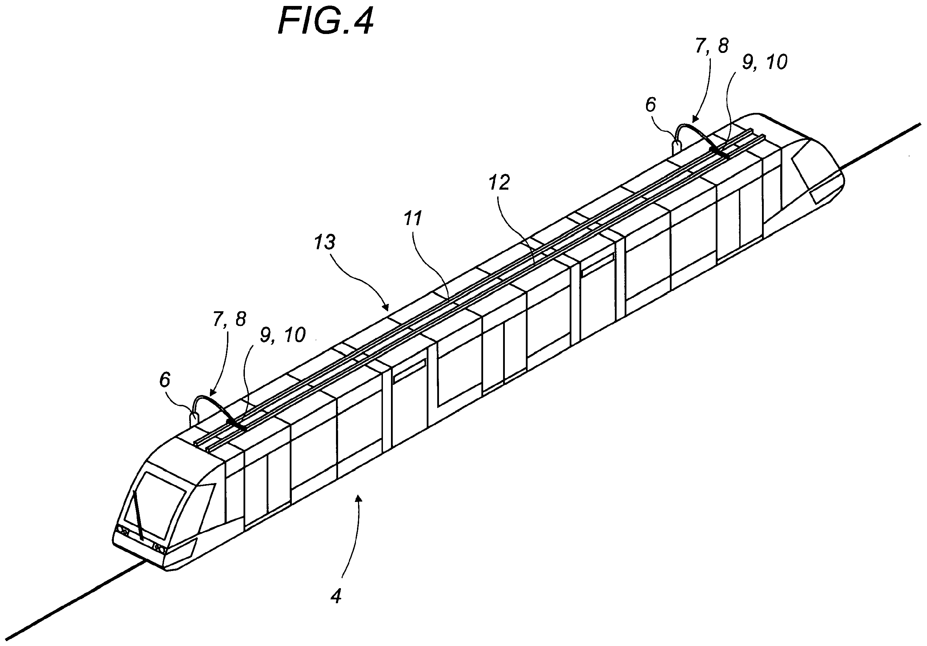

Il peut s'agir, comme représenté schématiquement sur la figure 4, d'un ou de deux rails de captage 11 ou 12 électriquement conducteurs formant une ou deux piste(s) parallèle(s) de captage, portés par un support électriquement isolant monté par l'intermédiaire d'une suspension sur la structure de toit 13 du véhicule 4.

L'espacement des poteaux distributeurs 5 sera de préférence inférieur à la longueur du ou des rail(s) conducteur(s) de captage prévu(s) sur le toit du véhicule.

Les branches 7 ou 8 des poteaux distributeurs 5 sont de préférence relativement flexibles pour assurer le contact entre la barre de contact 10 et l'équipement supérieur de captage du véhicule.

Le contact peut également être assuré sous une contrainte élastique vers le ou les rail(s) de captage 11 ou 12, contrainte procurée par l'effet élastique de la branche correspondante 7 ou 8 ou par une force extérieure à cette branche.

Concernant les poteaux distributeurs 5, ceux-ci peuvent être multifonction et ainsi intégrer par exemple la fonction d'éclairage public par une ou plusieurs branches 14 terminées par une ou plusieurs source(s) lumineuse(s) 15.

Bien entendu, pour un fonctionnement sans interruption, il faut que dans les sections de fourniture d'énergie électrique, la distance entre les poteaux distributeurs 5 soit inférieure à la longueur linéaire de captage sur la structure de toit 13 du véhicule 4 récepteur.

Ce type de fourniture d'énergie électrique permet de s'affranchir de lignes aériennes continues, tout en garantissant un fonctionnement de même fiabilité. Il peut en outre procurer un niveau de sécurité nettement supérieur à celui des lignes aériennes continues car, pour des raisons de sécurité, les pièces de contact des poteaux distributeurs 5 ne seront de préférence alimentées qu'à l'arrivée du véhicule 4 ou peu avant son arrivée et mises hors alimentation au moment de son départ du tronçon de captage.

Ces commutations d'alimentation électrique seront avantageusement commandées automatiquement par le passage du véhicule devant ou par le travers de capteurs ou de détecteurs de présence (non représentés) placés à distance de l'entrée et de la sortie de la section concernée.

Une protection mécanique du contact électrique peut aussi être ajoutée. Cette protection est automatiquement repoussée au passage de la piste de contact sur le toit du véhicule.

Selon un mode de réalisation préférentiel, les branches 7 ou 8 des poteaux distributeurs 5 peuvent être prévues relevables ou rétractables en position de repos lorsque le véhicule 4 se trouve hors du tronçon de captage, ce qui améliore encore la sécurité et permet le passage des véhicules routiers spéciaux de grande hauteur, par exemple ceux de convois exceptionnels ou d'intervention.

Un exemple de la façon de se rabattre et de se déployer des branches est donné par l'illustration de la figure 3.

Diverses variantes supplémentaires peuvent en outre être prévues.

## Revendications

1. Système de fourniture et de captage occasionnel d'énergie électrique notamment pour un véhicule (4) urbain de transport en commun à réserve d'énergie électrique motrice embarquée dans lequel il existe le long de sa voie de circulation, des tronçons de captage équipés de moyens individuels de fourniture d'énergie électrique formés par des structures aériennes de fourniture d'énergie électrique par contact ou à distance, l'énergie électrique ainsi transférée servant lors des phases d'arrêt momentané du véhicule à recharger sa réserve en énergie et lors du roulage à apporter une énergie électrique motrice ou complémentaire **caractérisé en ce que** le transfert de l'énergie électrique s'effectue entre des moyens individuels localisés de fourniture d'énergie électrique constituant autant de sources d'énergie électrique se répétant sur la longueur du tronçon et une structure de captage existant sur et se développant le long du véhicule, ces structures de captage portées en partie supérieure au niveau du toit du véhicule étant linéaires et d'une longueur supérieure à l'espacement existant entre deux moyens individuels successifs de fourniture d'énergie électrique, les moyens individuels localisés de fourniture d'énergie électrique étant des poteaux distributeurs (5) comprenant en extrémité un élément de contact électrique associé à une commutation d'alimentation électrique (35) commandée à l'arrivée du véhicule (4) ou peu avant son arrivée et mise hors alimentation au moment de son départ du tronçon de captage.

2. Système de captage selon la revendication 1, **caractérisé en ce que** les tronçons ou sections de fourniture d'énergie électrique sont des zones d'arrêt, des zones à des stations (1), des zones de ralentissement suivies d'accélération, ou des zones de montée (2) du véhicule (4) ou des zones supplémentaires (3) de fourniture d'énergie électrique.

3. Système de captage selon une des revendications précédentes, **caractérisé en ce que** le véhicule comporte une structure supérieure de captage d'énergie électrique coopérant avec des moyens aériens de fourniture d'énergie électrique est continue sur toute la longueur du véhicule.

4. Système de captage selon l'une des revendications précédentes, **caractérisé en ce que** la fourniture de l'énergie électrique s'effectue par l'intermédiaire de poteaux distributeurs (5) à une ou deux branches (7) ou (8) présentant en extrémité un élément de contact électrique.

5. Système de captage selon la revendication précédente, **caractérisé en ce que** l'élément de contact électrique est rétractable ou relevable.

6. Système de captage selon une des revendications précédentes, **caractérisé en ce que** l'élément de contact électrique est une barre (10) de contact électrique de fourniture d'énergie électrique.

7. Système de captage selon une des revendications précédentes, **caractérisé en ce que** l'élément de contact électrique est protégé lorsqu'il n'est pas en contact électrique d'alimentation.

8. Système de captage selon la revendication 3, **caractérisé en ce que** la structure supérieure de captage d'énergie électrique est un ensemble d'un ou de plusieurs rails de captage (11) ou (12) électriquement conducteurs montés sur un support électriquement isolant.

9. Système de captage selon une des revendications précédentes, **caractérisé en ce que** l'espacement des poteaux distributeurs (5) est inférieur à la longueur des rails de captage (11) ou (12).

10. Système de captage selon une des revendications précédentes, **caractérisé en ce que** les poteaux distributeurs (5) sont espacés régulièrement.

11. Système de captage selon une des revendications précédentes, **caractérisé en ce que** chaque poteau distributeur (5) comporte une fonction complémentaire d'éclairage public au moyen d'une ou de plusieurs sources lumineuses (15).

## Patentansprüche

1. System zur Versorgung mit und zur gelegentlichen Abnahme von elektrischer Energie, insbesondere für ein Fahrzeug (4) des öffentlichen Personennahverkehrs, zur Reserve von elektrischer Antriebsenergie an Bord, bei welchem entlang seiner Fahrspur Abnahmeabschnitte vorgesehen sind, welche mit individuellen Mitteln zur elektrischen Energieversorgung ausgestattet sind, die von oberirdischen Strukturen zur elektrischen Energieversorgung durch Kontakt oder mit Abstand ausgebildet sind, wobei die derart übertragene elektrische Energie während vorübergehendender Haltephasen des Fahrzeugs zum Nachladen seiner Energiereserve und während der Fahrt zum Bereitstellen einer elektrischen Antriebs- oder Ergänzungsenergie dient, **dadurch gekennzeichnet, dass** sich die Übertragung der elektrischen Energie zwischen individuellen lokalisierten elektrischen Energieversorgungsmitteln vollzieht, welche gleichermaßen sich über die Länge der Abschnitte wiederholende elektrische Energiequellen sowie eine Versorgungsstruktur bilden, die auf dem Fahrzeug angeordnet ist und sich in Längsrichtung desselben erstreckt, wobei die im oberen Bereich auf Höhe des Daches des Fahrzeugs getragenen Versorgungsstrukturen linear sind und eine Länge besitzen, welche größer ist als der zwischen zwei aufeinanderfolgenden individuellen elektrischen Energieversorgungsmitteln vorhandene Zwischenraum, wobei die individuellen lokalisierten elektrischen Energieversorgungsmittel von Versorgungsmasten (5) gebildet sind, welche endseitig mit einem elektrischen Kontaktelement versehen sind, das mit einer Umschaltung der elektrischen Energieversorgung (35) in Verbindung steht, welche durch die Ankunft des Fahrzeugs (4) oder kurz vor seiner Ankunft betätigt und zum Zeitpunkt seiner Abfahrt von dem Abnahmeabschnitt von der Versorgung getrennt wird.

2. Abnahmesystem nach Anspruch 1, **dadurch gekennzeichnet, dass** die Abschnitte oder Teilbereiche der elektrischen Energieversorgung Haltezonen, Zonen an Haltestellen (1), von Beschleunigungszonen gefolgte Verlangsamungszonen oder Steigungszonen (2) des Fahrzeugs (4) oder zusätzliche Zonen (3) zur elektrischen Energieversorgung sind.

3. Abnahmesystem nach einem der vorangehenden Ansprüche, **dadurch gekennzeichnet, dass** das Fahrzeug eine obere Struktur zur Abnahme von elektrischer Energie aufweist, welche mit den oberirdischen Mitteln zur elektrischen Energieversorgung zusammenwirkt und sich über die gesamten Länge des Fahrzeugs erstreckt.

4. Abnahmesystem nach einem der vorangehenden Ansprüche, **dadurch gekennzeichnet, dass** sich die elektrische Energieversorgung mittels Versorgungsmasten (5) mit einem oder zwei Bügeln (7) oder (8) vollzieht, welche endseitig mit einem elektrischen Kontaktelement versehen sind.

5. Abnahmesystem nach dem vorangehenden Anspruch, **dadurch gekennzeichnet, dass** das elektrische Kontaktelement einziehbar oder zurückklappbar ist.

6. Abnahmesystem nach einem der vorangehenden Ansprüche, **dadurch gekennzeichnet, dass** das elektrische Kontaktelement eine elektrische Kontaktschiene (10) zur elektrischen Energieversorgung ist.

7. Abnahmesystem nach einem der vorangehenden Ansprüche, **dadurch gekennzeichnet, dass** das elektrische Kontaktelement geschützt ist, während es nicht in elektrischem Stromversorgungskontakt steht.

8. Abnahmesystem nach Anspruch 3, **dadurch gekennzeichnet, dass** die obere Struktur zur Abnahme von elektrischer Energie von einer Einheit mit einer oder mehreren elektrisch leitfähigen Abnehmerschienen (11) oder (12) gebildet ist, welche an einem elektrisch isolierten Träger montiert sind.

9. Abnahmesystem nach einem der vorangehenden Ansprüche, **dadurch gekennzeichnet, dass** der Abstand der Versorgungsmasten (5) kleiner ist als die Länge der Abnehmerschienen (11) oder (12).

10. Abnahmesystem nach einem der vorangehenden Ansprüche, **dadurch gekennzeichnet, dass** die Versorgungsmasten (5) gleichmäßig voneinander beabstandet sind.

11. Abnahmesystem nach einem der vorangehenden Ansprüche, **dadurch gekennzeichnet, dass** jeder Versorgungsmast (5) eine zusätzliche öffentliche Beleuchtungsfunktion mittels einer oder mehrerer Lichtquellen (15) besitzt.

## Claims

1. System for intermittent supply and capture of electrical energy, in particular for an urban public transport vehicle (4) with an on-board reserve of electrical driving energy, in which there are along the travel route thereof capturing portions which are provided with individual means for supplying electrical energy formed by aerial structures for supplying electrical energy via contact or remotely, the electrical energy thus transferred being used during momentary stoppage phases of the vehicle to recharge the energy reserve thereof and during travel to provide driving or complementary electrical energy, **characterised in that** the transfer of the electrical energy is carried out between localised individual means for supplying electrical energy which constitute the same number of sources of electrical energy which are repeated along the length of the portion and a capturing structure which exists on and which extends along the vehicle, these capturing structures carried at the upper portion in the region of the roof of the vehicle being linear and having a length greater than the spacing existing between two individual successive means for supplying electrical energy, the localised individual means for supplying electrical energy being distributor poles (5) which comprise at the end an electrical contact element which is associated with an electrical supply switching unit (35) which is actuated when the vehicle (4) arrives or shortly before it arrives and which is switched off when it departs from the capturing portion.

2. Capturing system according to claim 1, **characterised in that** the portions or sections for supplying electrical energy are stoppage zones, zones at stations (1), zones for slowing down followed by zones for acceleration, or ascent zones (2) of the vehicle (4) or additional zones (3) for supplying electrical energy.

3. Capturing system according to either of the preceding claims, **characterised in that** the vehicle comprises an upper structure for capturing electrical energy which cooperates with aerial means for supplying electrical energy is continuous over the entire length of the vehicle.

4. Capturing system according to any one of the preceding claims, **characterised in that** the supply of the electrical energy is carried out via distributor poles (5) at one or two branches (7) or (8) which have at the end an electrical contact element.

5. Capturing system according to the preceding claim, **characterised in that** the electrical contact element can be retracted or raised.

6. Capturing system according to any one of the preceding claims, **characterised in that** the electrical contact element is an electrical contact bar (1) for supplying electrical energy.

7. Capturing system according to any one of the preceding claims, **characterised in that** the electrical contact element is protected when it is not in electrical supply contact.

8. Capturing system according to claim 3, **characterised in that** the upper electrical energy capturing structure is an assembly of one or more electrically conductive capturing rails (11) or (12) which are mounted on an electrically insulating support.

9. Capturing system according to one of the preceding claims, **characterised in that** the spacing of the distributor poles (5) is less than the length of the capturing rails (11) or (12).

10. Capturing system according to one of the preceding claims, **characterised in that** the distributor poles (5) are regularly spaced apart.

11. Capturing system according to one of the preceding claims, **characterised in that** each distributor pole (5) comprises an additional function of public illumination by means of one or more light sources (15).
